# FASCICULE DE BREVET EUROPEEN

(11) **EP 1 375 236 B1**
(45) Date de publication et mention de la délivrance du brevet: **02.02.2005**
(21) Numéro de dépôt: 03291553.0
(22) Date de dépôt: 24.06.2003
(51) Int. Cl.: B60K 37/00, B62D 25/14

(54) **Ensemble de planche de bord et véhicule comprenant l'ensemble**
Instrumentenbrett-Baugruppe und Fahrzeug mit der Baugruppe
Instrument panel assembly and vehicle comprising the assembly

(30) Priorité: 26.06.2002 FR 0207931
(43) Date de publication de la demande: 02.01.2004
(73) Titulaire: Faurecia Interieur Industrie, 92000 Nanterre (FR)
(72) Inventeur: Brancheriau, Christian, 60114 Meru (FR)
(74) Mandataire: Arnaud, Jean

(56) Documents cités:
- EP-A- 0 061 846
- DE-U- 7 311 644
- PATENT ABSTRACTS OF JAPAN vol. 014, no. 305 (M-0992), 29 juin 1990 (1990-06-29) -& JP 02 099440 A (MAZDA), 11 avril 1990 (1990-04-11)
- PATENT ABSTRACTS OF JAPAN vol. 014, no. 193 (M-0963), 19 avril 1990 (1990-04-19) -& JP 02 037056 A (SUZUKI), 7 février 1990 (1990-02-07)

## Description

L'invention concerne un ensemble de planche de bord et un véhicule comprenant un tel ensemble.

Il s'agit plus précisément d'intégrer un boîtier, tel qu'un boîtier électrique, notamment un boîtier porte-fusibles ou analogue à la planche de bord pour un coût minimum tout en assurant une parfaite sécurité des occupants du véhicule en cas de choc.

Ce boîtier est en général monté amovible dans un support entre une position normale d'utilisation, escamotée, et une position de maintenance dans laquelle les fusibles et autres composants électriques ou électroniques sont accessibles. Il est généralement localisé à proximité du tablier coupe-feu du véhicule (séparation entre le compartiment moteur et l'habitacle) auquel il est fixé, car de nombreux câbles électriques du compartiment moteur viennent s'y raccorder (voir par exemple DE-U-7 311 644).

En cas de choc frontal, le tablier pénétrant à l'intérieur de l'habitacle, ledit boîtier risque de venir heurter les passagers. En particulier, dans le cas d'un boîtier porte-fusible, généralement disposé à gauche du conducteur, à proximité du pilier A (pied avant de la structure du véhicule) et en partie basse de la planche de bord, en cas de choc, le boîtier risque d'entrer en collision soit avec le pilier A du véhicule, soit avec le genou gauche du conducteur.

L'invention vise à résoudre ce problème sans augmenter notablement le coût de la planche de bord. Pour ce faire, conformément à l'invention, l'ensemble comprend :
- un élément structurel s'étendant suivant une direction d'allongement,
- des flasques obtenus de matière avec l'élément structurel et s'étendant sensiblement perpendiculairement à la direction d'allongement,
- un boîtier lié aux flasques par l'intermédiaire de moyens de retenue libérables, pour :
   - autoriser le déplacement dudit boîtier par rapport aux flasques sous l'action d'une contrainte, supérieure à un seuil déterminé, s'exerçant suivant une direction longitudinale sensiblement perpendiculaire à la direction d'allongement et sensiblement horizontale, et
   - maintenir le boîtier par rapport aux flasques lorsque le boîtier est soumis à des contraintes inférieures au seuil donné suivant ladite direction longitudinale.

Ainsi, le boîtier étant lié à l'élément structurel par l'intermédiaire des flasques, la liaison entre le boîtier et le tablier peut être supprimée. Par conséquent, lorsque le tablier pénètre à l'intérieur de l'habitacle et entre en collision avec le boîtier, les moyens de retenue libérables libèrent le boîtier par rapport aux flasques, de sorte qu'il ne risque pas de venir endommager le pilier A ou le genou du conducteur.

En réalisant les flasques en même temps que l'élément structurel de planche de bord, on réduit le coût de réalisation du support du boîtier et on économise sur le temps de montage du boîtier sur la planche de bord.

Afin de réduire encore le risque de blessure des passagers, conformément à l'invention, l'ensemble présente les caractéristiques complémentaires suivantes :
- le boîtier s'étend suivant la direction longitudinale entre une extrémité avant et une extrémité arrière,
- les moyens de retenue libérables comprennent une partie avant disposée à proximité de l'extrémité avant et une partie arrière distincte de la partie avant et disposée à proximité de l'extrémité arrière.

La séparation des moyens de retenue libérables en une partie avant et une partie arrière permet d'obtenir tant une bonne retenue qu'une libération du boîtier après une faible translation (quelques centimètres tout au plus) du boîtier par rapport aux flasques, par opposition à une glissière qui nécessite une translation sur une distance au moins égale à la moitié de la longueur du boîtier avant libération de celui-cdu boîtier, si l'on souhaite que la glissière maintienne le boîtier de manière satisfaisante en conditions normales.

Avantageusement, les moyens de retenue libérables comprennent deux alésages radialement ouverts, formant sensiblement un Ω, élastiquement déformables et deux tétons s'insérant étroitement dans lesdits alésages.

De tels moyens de retenue sont relativement simples, peu coûteux, fiables et robustes.

De préférence, les alésages en forme de Ω présentent une ouverture radiale dirigée légèrement vers le haut.

Ainsi, le poids du boîtier risque moins de provoquer une libération inopinée du boîtier par rapport aux flasques, en particulier sous l'action de vibrations.

Selon une caractéristique avantageuse complémentaire, les moyens de retenue libérables comprennent en outre deux rails courbes prolongeant chacun des alésages en forme de Ω, de sorte à guider lesdits tétons.

Ainsi, le déplacement dudit boîtier par rapport aux flasques est contrôlé après libération, ce qui réduit par conséquent le risque que le boîtier ne heurte les occupants du véhicule ou une partie du véhicule.

Par ailleurs, le seuil déterminé de contrainte au-delà duquel les moyens de retenue libérables autorisent le déplacement du boîtier est avantageusement compris entre 10 Newton et 100 Newton.

Ainsi, le boîtier est maintenu suffisamment fermement par rapport aux flasques par l'intermédiaire des moyens de retenue libérables, pour ne pas se libérer sous l'action de vibrations et il peut être libéré, notamment pour une opération de maintenance, en exerçant un effort modéré.

L'invention a en outre pour objet un véhicule comprenant un habitacle renfermant ledit ensemble et un compartiment moteur avant séparé de l'habitacle par un tablier. Conformément à l'invention, il existe un espace séparant les flasques du tablier.

Ainsi, on dispose d'un espace pour absorber l'énergie en cas de choc, avant que le tablier n'entre en collision avec la structure de la planche de bord via les flasques. Cet espace peut être obtenu d'une part du fait que le boîtier est maintenu sur la structure de planche de bord et non sur le tablier, et d'autre part par la libération de la liaison entre les flasques et le boîtier.

Avantageusement, les flasques sont espacés du tablier d'au moins 30 millimètres.

L'invention va apparaître encore plus clairement dans la description qui va suivre, faite en référence aux dessins annexés dans lesquels :

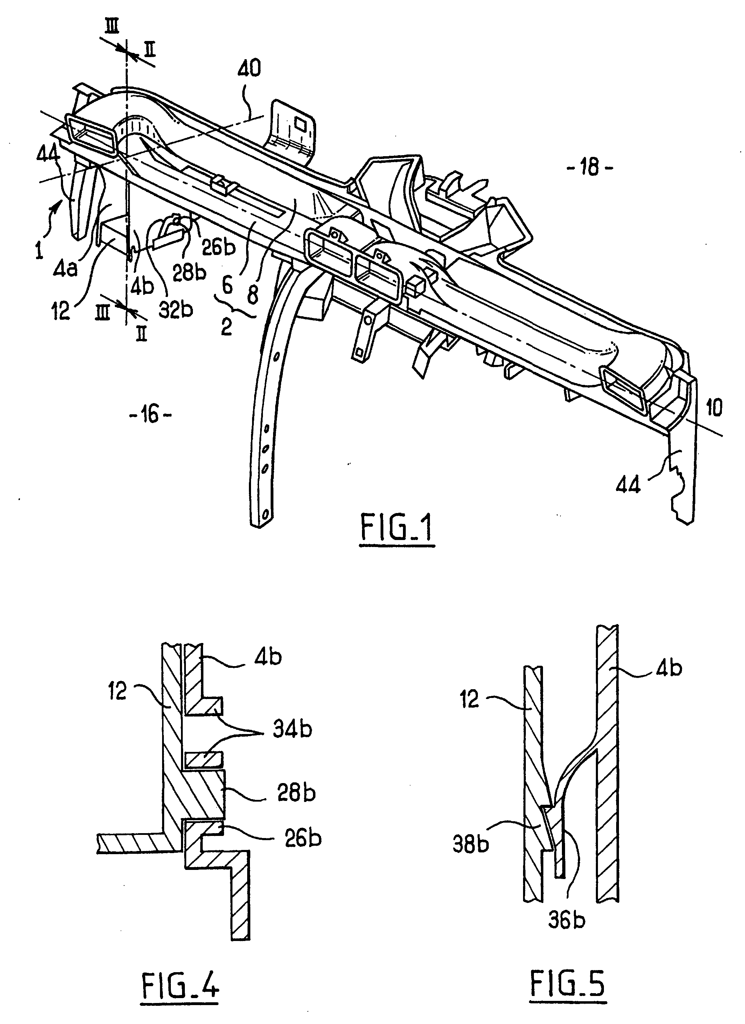

- la figure 1 est une vue en perspective d'un ensemble conforme à l'invention,
- la figure 2 est une vue en coupe selon la ligne repérée II-II à la figure 1,

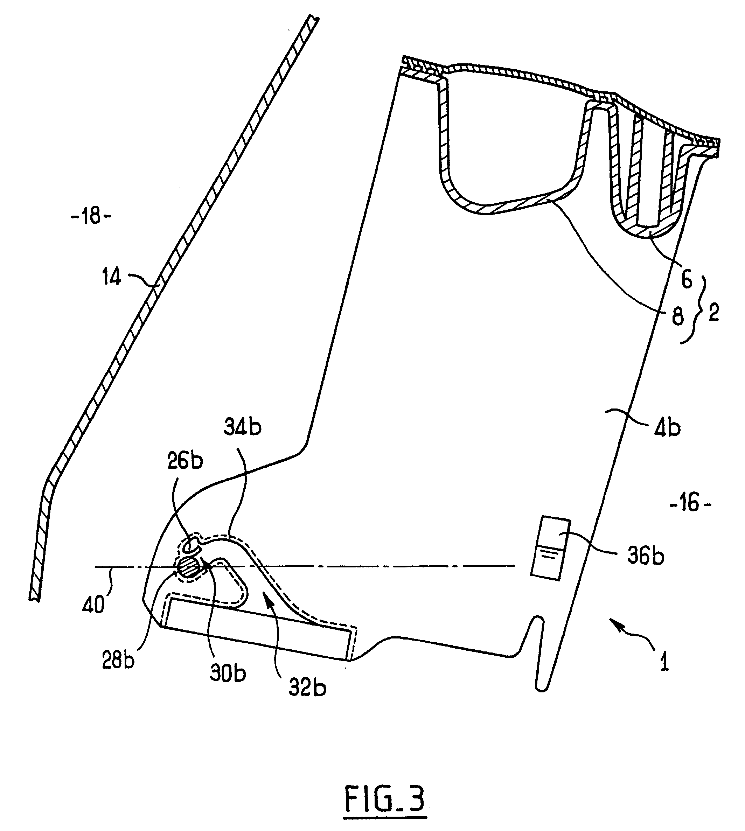

- la figure 3 est une vue en coupe selon la ligne repérée III-III à la figure 1,
- la figure 4 est une vue en coupe selon la ligne repérée IV-IV à la figure 2,
- la figure 5 est une vue en coupe selon la ligne repérée V-V à la figure 2.

Les figures illustrent un ensemble 1 de planche de bord de véhicule destiné à être disposé entre le tablier pare-feu 14 et l'habitacle 16 d'un véhicule. Cet ensemble comprend notamment un élément structurel 2 s'étendant transversalement dans le véhicule suivant une direction d'allongement 10, des flasques latéraux 4a, 4b s'étendant sensiblement perpendiculairement à la direction d'allongement 10 et un boîtier 12 s'étendant entre les deux flasques 4a, 4b.

L'élément structurel s'étend entre les piliers avant 44 du véhicule et comprend ici une traverse 6 nervurée et un conduit aéraulique 8 accolé à la traverse 6. La traverse 6 et le conduit aéraulique 8 sont réalisés en matière plastique, avantageusement surmoulée sur une âme métallique, et obtenus ensemble de moulage avec les flasques 4a, 4b.

Le boîtier 12 est constitué ici par une boîte de servitude intégrée et plus précisément un boîtier indépendant contenant des fusibles et divers éléments électriques. Elle est localisée à proximité du tablier 14, car de multiples fils électriques 42 sont reliés au compartiment moteur 18 du véhicule en passant à travers des trous 20 ménagés dans le tablier 14 en parties supérieure et inférieure. En général, elle est positionnée, tel qu'illustré, en partie basse de la planche de bord, entre le genoux du conducteur et le pilier avant adjacent 44 du véhicule.

Par ailleurs, certains fils électriques 42 longent la traverse 6 pour alimenter les équipements électriques de la planche de bord.

Les flasques 4a, 4b s'étendent chacun, suivant une direction logitudinale 40 perpendiculaire à la direction d'allongement 10 et sensiblement horizontale, entre une extrémité avant 22 située à proximité du tablier 14 et une extrémité arrière 24. A proximité de l'extrémité avant 22, les flasques 4a, 4b présentent chacun un alésage 26a, 26b s'étendant suivant la direction d'allongement 10 et recevant un téton 28b solidaire du boîtier 4. Lesdits alésages 26a, 26b présentent chacun une ouverture radiale 30a, 30b, de sorte qu'ils présentent une section sensiblement en forme de Ω. Ainsi, il est possible d'engager les tétons 28b dans les alésages 26a, 26b pour retenir le boîtier 12, par rapport aux flasques 4a, 4b ou de les libérer par déformation élastique des alésages 26a, 26b.

Afin d'éviter que les tétons 28b ne soient libérés de manière inopinée, sous l'action de secousses du véhicule, les ouvertures radiales 30a, 30b sont disposées sensiblement sur le dessus des alésages 26a, 26b. Et, pour simplifier l'engagement des tétons 28b dans les alésages 26a, 26b, des rails de guidage 32a, 32b sont ménagés dans les flasques 4a, 4b. Ces rails de guidage 32a, 32b présentent une forme sensiblement en "virgule" prolongeant les alésages 26a, 26b.

Les alésages 26a, 26b et les rails de guidage sont obtenus de moulage avec les flasques 4a, 4b. En outre, afin d'améliorer la robustesse, chacun des flasques intègre une nervure 34a, 34b bordant chacun des alésages 26a, 26b et des rails de guidage 32a, 32b.

Les flasques 4a, 4b comprennent en outre chacun une patte élastique 36b disposée à proximité de l'extrémité arrière 24 desdits flasques. Ces pattes coopèrent avec des crans 38b ménagés sur le boîtier pour compléter la fixation libérable du boîtier 12 sur les flasques 4a, 4b.

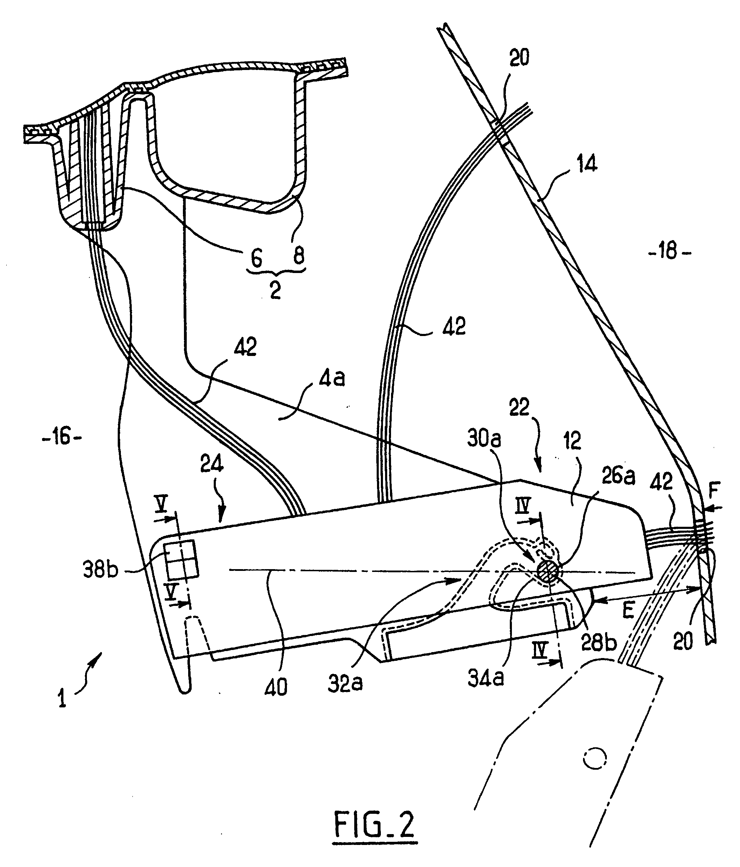

En cas de choc frontal important subi par le véhicule, il se produit un déplacement du tablier 14 vers l'habitacle 16 sous un effort F. Le tablier 14 vient alors heurter le boîtier 12, ce qui libère les tétons 28b des alésages 26a, 26b et les pattes élastiques 36b des crans 38b. A proximité de l'extrémité arrière 24, le boîtier est complètement libéré, tandis qu'à proximité de l'extrémité avant, les tétons 28b sont guidés le long des rails 32a, 32b, de sorte que le boîtier bascule vers le bas en pivotant autour des tétons 28b. Puis, les tétons 28b translatent le long des rails de guidage 32a, 32b, avant d'en sortir et être complètement libérés. Le boîtier 12 n'est alors plus tenu que par les fils électriques 42, tel qu'illustré en trait mixte court et long à la figure 2.

L'effort de poussée du tablier n'est alors pas transmis au boîtier, tant que le tablier n'entre pas en collision avec les flasques 4a, 4b. Les flasques seront avantageusement séparés du tablier par un espace E d'au moins 30 millimètres, et de préférence 40 millimètres, pour absorber l'énergie du choc frontal.

Les moyens de retenue libérables constitués par les tétons 28b, les alésages élastiquement déformables 26a, 26b, les pattes élastiques 36b et les crans 38b sont dimensionnés pour libérer le boîtier au-delà d'un seuil d'effort qui est avantageusement compris entre 10 Newton et 100 Newton, de sorte que le boîtier peut également être libéré pour des opérations de maintenance (remplacement d'un fusible par exemple).

## Revendications

1. Ensemble (1) de planche de bord comprenant :
- un élément structurel (2) s'étendant suivant une direction d'allongement (10),
- des flasques (4a, 4b) obtenus de matière avec l'élément structurel et s'étendant sensiblement perpendiculairement à la direction d'allongement,
- un boîtier (12) lié aux flasques par l'intermédiaire de moyens de retenue libérables (26a, 26b, 28b, 36b, 38b) pour :
• autoriser le déplacement dudit boîtier par rapport aux flasques sous l'action d'une contrainte, supérieure à un seuil déterminé, s'exerçant suivant une direction longitudinale sensiblement perpendiculaire à la direction d'allongement et sensiblement horizontale, et
• maintenir le boîtier par rapport aux flasques lorsque le boîtier est soumis à des contraintes inférieures au seuil donné suivant ladite direction longitudinale.

2. Ensemble selon la revendication 1, **caractérisé en ce que** les moyens de retenue libérables comprennent deux alésages (26a, 26b) radialement ouverts, formant sensiblement un Ω, élastiquement déformables et deux tétons (28b) s'insérant étroitement dans lesdits alésages.

3. Ensemble selon la revendication 2, **caractérisé en ce que** les alésages (26a, 26b) présentent une ouverture radiale (30a, 30b) dirigée légèrement vers le haut.

4. Ensemble selon la revendication 2 ou la revendication 3, **caractérisé en ce que** les moyens de retenue libérables comprennent en outre un rail courbe (32a, 32b) prolongeant les alésages en forme de Ω, de sorte à guider lesdits tétons.

5. Ensemble selon l'une quelconque des revendications 2 à 4, **caractérisé en ce que** lesdits alésages (26a, 26b) sont moulés avec les flasques.

6. Ensemble selon l'une quelconque des revendications précédentes, **caractérisé en ce que** :
- le boîtier s'étend suivant la direction longitudinale (40) entre une extrémité avant (22) et une extrémité arrière (24),
- les moyens de retenue libérables comprennent une partie avant disposée à proximité de l'extrémité avant et une partie arrière distincte de la partie avant et disposée à proximité de l'extrémité arrière.

7. Ensemble selon l'une quelconque des revendications précédentes, **caractérisé en ce que** le seuil déterminé de contrainte (F) au-delà duquel les moyens de retenue libérables (26a, 26b, 28b, 36b, 38b) autorisent le déplacement du boîtier est compris entre 10 Newton et 100 Newton.

8. Véhicule comprenant un habitacle (16) renfermant un ensemble (1) selon l'une quelconque des revendications précédentes et un compartiment moteur avant (18) séparé de l'habitacle par un tablier (14), **caractérisé en ce qu'**il existe un espace séparant les flasques (4a, 4b) du tablier (14).

9. Véhicule selon la revendication 8, **caractérisé en ce que** les flasques (4a, 4b) sont espacés du tablier (14) d'au moins 30 millimètres.

## Patentansprüche

1. Instrumentenbrettbaugruppe (1) mit:
- einem Aufbauelement (2), das sich einer Verlängerungsrichtung (10) entlang erstreckt,
- Flanschen (4a, 4b), die aus Material mit dem Aufbauelement erhalten werden und sich im wesentlichen senkrecht zu der Verlängerungsrichtung erstrecken,
- einem Gehäuse (12), das mit den Flanschen mittels freimachbaren Rückhaltemitteln (26a, 26b, 28b, 36b, 38b) verbunden ist, um:
• die Verschiebung des Gehäuses bezüglich der Flansche unter der Einwirkung einer Belastung oberhalb einer festgesetzten Schwelle zu gestatten, die sich einer Längsrichtung folgend im wesentlichen senkrecht zu der Verlängerungsrichtung und im wesentlichen horizontal auswirkt, und
• das Gehäuse bezüglich der Flansche zu halten, wenn das Gehäuse Belastungen unterhalb der gegebenen Schwelle ausgesetzt wird, welche der Längsrichtung folgen.

2. Baugruppe nach Anspruch 1, **dadurch gekennzeichnet, daß** die freimachbaren Rückhaltemittel zwei radial offene Bohrungen (26a, 26b) aufweisen, welche im wesentlichen ein Ω bilden, elastisch verformbar sind und zwei Zapfen (28b) aufweisen, die sich eng in die Bohrungen einfügen.

3. Baugruppe nach Anspruch 2, **dadurch gekennzeichnet, daß** die Bohrungen (26a, 26b) eine radiale Öffnung (30a, 30b) aufweisen, die leicht nach oben gerichtet ist.

4. Baugruppe nach Anspruch 2 oder Anspruch 3, **dadurch gekennzeichnet, daß** die freimachbaren Rückhaltemittel ferner eine gekrümmte Schiene (32a, 32b) aufweisen, welche die Bohrungen in Form eines Ω verlängern, derart, daß die Zapfen geführt werden.

5. Baugruppe nach einem der Ansprüche 2 bis 4, **dadurch gekennzeichnet, daß** die Bohrungen (26a, 26b) mit den Flanschen geformt sind.

6. Baugruppe nach einem der vorhergehenden Ansprüche, **dadurch gekennzeichnet, daß**:
- sich das Gehäuse der Längsrichtung (40) folgend zwischen einem vorderen Ende (22) und einem rückwärtigen Ende (24) erstreckt,
- die freimachbaren Rückhaltemittel einen vorderen Teil aufweisen, der in der Nähe des vorderen Endes angeordnet ist, und einen rückwärtigen Teil, der sich von dem vorderen Teil unterscheidet und in der Nähe des rückwärtigen Endes angeordnet ist.

7. Baugruppe nach einem der vorhergehenden Ansprüche, **dadurch gekennzeichnet, daß** die festgesetzte Belastungsschwelle (F), oberhalb welcher die freimachbaren Rückhaltemittel (26a, 26b, 28b, 36b, 38b) die Verschiebung des Gehäuses gestatten, zwischen 10 Newton und 100 Newton beträgt.

8. Fahrzeug mit einem Karosseriegehäuse (16), welches eine Baugruppe (1) nach einem der vorhergehenden Ansprüche einschließt, und mit einem vorderen Motorraum (18), der von dem Karosseriegehäuse durch eine Stirnwand (14) getrennt ist, **dadurch gekennzeichnet, daß** ein Abstand existiert, welcher die Flansche (4a, 4b) von der Stirnwand (14) trennt.

9. Fahrzeug nach Anspruch 8, **dadurch gekennzeichnet, daß** die Flansche (4a, 4b) sich von der Stirnwand (14) um mindestens 30 Millimeter im Abstand befinden.

## Claims

1. Dashboard assembly (1) comprising:
- a structural element (2) extending in a direction of elongation (10),
- flanges (4a, 4b) being an integral part of the structural element and extending substantially perpendicularly to the direction of elongation,
- a housing (12) connected to the flanges by way of releasable retaining means (26a, 26b, 28b, 36b, 38b), in order:
* to permit the displacement of the housing relative to the flanges under the action of a load, greater than a determined threshold, exerted in a longitudinal direction which is substantially perpendicular to the direction of elongation and substantially horizontal, and
* to hold the housing in position relative to the flanges when the housing is subjected to loads lower than the given threshold in the longitudinal direction.

2. Assembly according to claim 1, **characterized in that** the releasable retaining means comprise two radially open bores (26a, 26b) which are substantially Ω-shaped and which are resiliently deformable, and two studs (28b) which are inserted tightly in the bores.

3. Assembly according to claim 2, **characterized in that** the bores (26a, 26b) have a radial opening (30a, 30b) directed slightly upwards.

4. Assembly according to claim 2 or claim 3, **characterized in that** the releasable retaining means also comprise a curved rail (32a, 32b) which extends the Ω-shaped bores in such a manner as to guide the studs.

5. Assembly according to anyone of claims 2 to 4, **characterized in that** the bores (26a, 26b) are moulded with the flanges.

6. Assembly according to anyone of preceding claims, **characterized in that**:
- the housing extends in the longitudinal direction (40) between a front end (22) and a rear end (24),
- the releasable retaining means comprise a front portion disposed in the vicinity of the front end and a rear portion separate from the front portion and disposed in the vicinity of the rear end.

7. Assembly according to anyone of preceding claims, **characterized in that** the determined load threshold (F) beyond which the releasable retaining means (26a, 26b, 28b, 36b, 38b) permit the displacement of the housing is from 10 newtons to 100 newtons.

8. Vehicle comprising a passenger space (16) containing an assembly (1) according to anyone of preceding claims and a front engine compartment (18) separated from the passenger space by a bulkhead (14), **characterized in that** there is a space separating the flanges (4a, 4b) from the bulkhead (14).

9. Vehicle according to claim 8, **characterized in that** the flanges (4a, 4b) are spaced from the bulkhead (14) by at least 30 millimetres.
